# EUROPÄISCHE PATENTANMELDUNG

(11) **EP 2 246 008 A2**
(43) Veröffentlichungstag der Anmeldung: **03.11.2010**
(21) Anmeldenummer: 10161603.5
(22) Anmeldetag: 30.04.2010
(51) Int. Cl.: A61C 13/00

(54) **Verfahren zur Herstellung von künstlichem Zahnersatz**

(30) Priorität: 02.05.2009 DE 102009019781
(71) Anmelder: White Peaks Dental Systems GmbH & Co. KG, 45239 Essen (DE)
(72) Erfinder: Puckert, Werner, 45239, Essen (DE)
(74) Vertreter: Vomberg, Friedhelm

(57) **Zusammenfassung**

Die vorliegende Erfindung betrifft ein Verfahren zur Herstellung von künstlichem Zahnersatz, bei dem in einer Fräseinheit auf Basis von bestimmten Fräsdaten aus einem Rohling ein Zahnersatzgrundkörper herausgefräst wird. Erfindungsgemäß wird auf dem Zahnersatzgrundkörper eine pastöse Schneidemasse überschüssig aufgetragen, die durch materialspezifische Behandlung aushärtet, wobei anschließend der Zahnersatzgrundkörper mit darauf ausgehärteter Schneidemasse in der Fräseinheit in anatomische Form gefräst wird.

## Beschreibung

Die vorliegende Erfindung betrifft ein Verfahren zur Herstellung von künstlichem Zahnersatz, bei dem in einer Fräseinheit auf Basis von bestimmten Fräsdaten aus einem Rohling ein Zahnersatzgrundkörper herausgefräst wird.

Nach dem Stand der Technik ist eine Vielzahl von Herstellungsverfahren für künstlichen Zahnersatz bekannt.

Beispielsweise wird in der DE 103 09 795 A1 ein Verfahren zur Herstellung eines Zahnersatzteils aus metallischen Werkstoffen vorgeschlagen. Hierzu soll ein aus einer metallischen Pulvermischung geformter und verfestigter Rohling bereitgestellt werden, der zu einem Zwischenkörper bearbeitet wird. Nach der Fertigstellung des Zwischenkörpers wird dieser durch eine Nachbehandlung (z. B. Sintern) auf die materialtechnisch gewünschte Endeigenschaften des Zahnersatzteils gebracht.

Nachteilig an dem derzeit bekannten Verfahren zur Herstellung von künstlichem Zahnersatz ist, dass stets eine vom Zahnarzt oder Zahntechniker vorzunehmende Endbearbeitung des Zahnersatzteils notwendig ist, bei der die Zahnoberfläche auf eine anatomische Form gebracht wird, damit ein optisch ansprechendes Endergebnis geliefert wird. Diese Endbearbeitung des Zahnersatzes ist daher ein kostenintensiver und zeitraubender Herstellungsschritt.

Es ist daher Aufgabe der vorliegenden Erfindung, ein Verfahren zur Herstellung von anatomisch geformtem künstlichen Zahnersatz vorzuschlagen, bei dem auf eine manuelle von Fachkräften auszuführenden Endbearbeitung des Zahnersatzteils verzichtet werden kann.

Diese Aufgabe wird durch das Verfahren nach Anspruch 1 gelöst, wonach vorgesehen ist, dass zunächst in einer Fräseinheit auf Basis von bestimmten Fräsdaten aus einem Rohling ein Zahnersatzgrundkörper herausgefräst wird. Erfindungsgemäß wird auf den Zahnersatzgrundkörper eine Schneidemasse überschüssig aufgetragen, die durch materialspezifische Behandlung aushärtet, wobei anschließend der Zahnersatzgrundkörper mit darauf ausgehärteter Schneidemasse in derselben Fräseinheit in anatomische Form gefräst wird. Durch das erfindungsgemäße Verfahren ist es nunmehr möglich, ein aus mehreren Schichten aufgebauten künstlichen Zahnersatz in sehr kurzer Zeit zu schaffen, ohne dass dabei zahntechnisches Fachpersonal benötigt wird. Ein derartig hergestellter Zahnersatz genügt hohen optischen Ansprüchen, da auch die natürlichen Zähne aus mehreren Schichten aufgebaut sind. Insbesondere die transluzente Schmelzschicht kann durch das erfindungsgemäße Verfahren optimal nachgebildet werden, indem die speziell hergestellte Schneidemasse in entsprechender und wählbarer Dicke auf dem Zahnersatzgrundkörper aufgetragen wird. Zudem kann der Zahnersatzgrundkörper teilweise farblich verändert werden, so dass sog. Schmelzanomalien nachgebildet werden, die dem Zahnersatzteil eine noch größere Natürlichkeit verleihen.

Vorteilhafte Ausgestaltungen der vorliegenden Erfindung werden im Folgenden anhand der Unteransprüche beschrieben.

Vorzugsweise werden die Fräsdaten direkt oder indirekt aus einem optischen oder mechanischen Abdruck vom beschliffenen Zahnstumpf gewonnen. Hierzu wird bevorzugt ein Oralscanner verwendet, der die erfassten Daten direkt zu einer CAD-Software weiterleitet (direkte Abnahme). Alternativ hierzu besteht auch die Möglichkeit, einen mechanischen Abdruck zu nehmen, von dem ein Gipsmodel angefertigt wird, welches anschließend von einem optischen Scanner oder einem Laserscanner erfasst wird (indirekte Abnahme). Auch die hiermit aufgenommenen Daten werden an die CAD-Software übermittelt.

Weiterhin bevorzugt wird die endgültige Form des Zahnersatzes am Computer vorzugsweise mittels der CAD-Software modelliert und ein entsprechender erster Datensatz abgespeichert. Zudem wird vorteilhafterweise ein zweiter Datensatz entsprechend dem Zahnersatzgrundkörper erzeugt und abgespeichert, der dem Zahnersatz reduziert und den Anteil der Schmelzschicht entspricht. Die gewonnenen Datensätze werden weiterhin in sog. STL - Dateien umgewandelt, die den Fräsdaten entsprechen und die an die CNC - Fräsanlage gesendet werden. Für das erfindungsgemäße Verfahren hat diese Vorgehensweise den Vorteil, dass aus dem Rohling zunächst auf Basis des zweiten Datensatzes der Zahnersatzgrundkörper herausgefräst werden kann. Anschließend wird das Schneidematerial beispielsweise mittels eines Spatels in überschüssiger Form grob aufgetragen, wozu keine fachspezifischen Kenntnisse erforderlich sind. Die abschließende endgültige anatomische Formgebung wird wiederum in der bereits beschriebenen CNC - Fräsanlage anhand des ersten erstellten Datensatzes durchgeführt. Der fertig gestellte Zahnersatz wird abschließend aus dem Fräsblock herausgetrennt und gegebenenfalls poliert. Der besondere Vorteil der Erfindung besteht darin, dass für sämtliche Arbeiten keine besondere Fachkenntnisse oder manuelle Fertigkeiten erforderlich sind, so dass die Tätigkeiten auch von nur gering geschultem, angelerntem Personal durchführbar sind.

Vorzugsweise wird der Rohling zum Auftragen und Aushärten der Schneidemasse aus der Fräseinheit entnommen, was einerseits das überschüssige Auftragen der Schneidemasse sowie die Bearbeitung zum Aushärten derselben erleichtert. Um jedoch den Zahnersatzgrundkörper mit der darauf überschüssig aufgebrachten und ausgehärteten Schneidemasse in der Fräseinheit exakt bearbeiten zu können, muss der Zahnersatzgrundkörper in genau dieselbe Position gebracht werden, die er vor der Entnahme aus der Fräseinheit eingenommen hatte. Hierzu besitzt der Rohling vorzugsweise eine Basis, mit der er in der Fräseinheit lösbar fixiert ist. Ferner sind zur Registrierung der Position des Rohlings bevorzugt Positionierungshilfen vorgesehen, wozu beispielsweise mehrere Markierungspunkte oder mindestens ein Positionierungspin auf der Basis aufgebracht sein können. Zur weiteren Bearbeitung wird der Rohling vorzugsweise zurück in die Fräseinheit gegeben, wo der Rohling anhand der Positionierungshilfe zunächst ausgerichtet wird. Im Falle von auf der Basis angeordneten Markierungspunkten sind optische Sensoren vorgesehen, mittels derer die exakte Position der Basis und damit des Rohlings vor der Entnahme festgestellt und gespeichert werden kann.

Anderenfalls ist in der Aufnahme der Fräseinheit eine Ausnehmung vorgesehen, in die ein auf der Basis angeordneter Positionierungspin eingreift. Dieser besitzt vorzugsweise einen ersten zylinderförmigen Bereich, einen Sockel sowie eine Platte, mit der der Positionierungspin mit der Basis verbunden ist. Nach einer bevorzugten Ausgestaltung sind an dem Pin mehrere Nuten angeordnet, in die korrespondierende Zapfen der Aufnahme der Fräseinheit eingreifen. Somit wird durch die Anordnung des Pins zunächst eine grobe Positionierung durchgeführt und anschließend die exakte Positionierung über die Nuten des Zapfens der Aufnahme und der Positionierungspins durchgeführt. Nach einer besonders bevorzugten Ausgestaltung ist vorgesehen, dass sowohl an dem zylinderförmigen Bereich, an dem Sockel sowie an der Platte mindestens eine Nut angeordnet ist. Durch diese räumliche Verteilung der Nuten wird die Genauigkeit der Positionierung zudem erhöht.

Nach einer besonderen bevorzugten Ausführungsform ist zudem vorgesehen, dass sowohl der Rohling als auch die Schneidemasse aus demselben Werkstoff bestehen, nämlich einem Komposit aus 75% bis 90%, vorzugsweise 80% bis 85%, nanokristallinen, silanisierten Gläsern und 10% bis 25%, vorzugsweise 15% bis 20% aus einer Kunststoffmatrix. Der Rohling wird bevorzugt durch die Behandlung mit Druck und Wärme auspolymerisiert. Demgegenüber ist vorgesehen, dass die transluszente Schneidemasse durch eine Behandlung mit Licht auspolymerisiert wird, wozu vorzugsweise ein Photoinitiator und eine Lichtquelle verwendet wird, die auf die Wellenlänge des Photoinitiators abgestimmt ist. Darüber hinaus können zum Auspolymerisieren auch chemische Katalysatoren verwendet werden.

Dadurch, dass beide Stoffe aus demselben Werkstoff bestehen, wird ein sehr guter Verbund zwischen der Schneidemasse und dem Zahnersatzgrundkörper geschaffen. Darüber hinaus sind in dem Werkstoff vorzugsweise Dimethacrylate vorhanden, die an der Oberfläche Inhibitionsschichten ausbilden, die die Eigenschaften haben, chemisch gleiches aber noch nicht auspolymerisiertes Material molekular zu binden. Somit wird ein noch besserer Halt zwischen den betreffenden Materialien geschaffen. Allerdings ist hierbei zu beachten, dass die Inhibitionsschicht auf dem Zahnersatzgrundkörper durch die erste maschinelle Bearbeitung verloren gehen kann. Um ein späteres Anpolymerisieren der Schneidemasse zu ermöglichen, ist nach einer besonderen Ausgestaltung vorgesehen, dass nach dem Herausfräsen des Zahnersatzgrundkörpers eine Dispersionsschicht auf diesen aufgetragen wird, was beispielsweise mittels eines Pinsels möglich ist.

Insgesamt wird durch das erfindungsgemäße Verfahren sowie durch die bevorzugten Ausgestaltungen hiervon ein Verfahren bereitgestellt, welches dem Zahnarzt ermöglicht schnell und kostengünstig Zahnersatzteile während einer Sitzung des Patienten (chairside Behandlung) herzustellen und anzupassen. Mehrfaches Nachbearbeiten des Zahnersatzteils sowie mehrfache Besuche des Patienten sind somit vermeidbar.

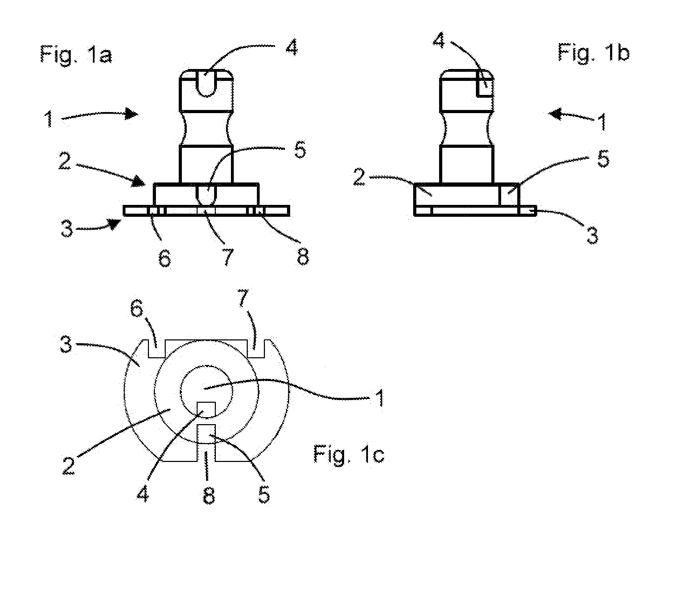

Ein konkretes Ausführungsbeispiel wird im Folgenden anhand der Figuren erläutert. Diese zeigen einen Positionierungspin in zwei Seitenansichten (Fig. 1a, b) sowie eine Draufsicht (Fig. 1c), wie er bevorzugt an der Basis des Rohlings angeordnet ist. Dieser besitzt einen zylinderförmigen Bereich 1, einen Sockel 2 sowie eine Platte 3. In diesen Teilbereichen sind jeweils Nuten 4, 5, 6, 7, 8 eingefräst, wobei eine Nut 4 an der Spitze des zylinderförmigen Bereichs angeordnet ist. Eine weitere Nut 5 ist an dem Sockel 2 vorgesehen und insgesamt drei weitere Nuten 6, 7, 8 an der Platte 3. Diese Ausgestaltung sorgt für eine besonders exakte Positionierung des Zahnersatzgrundkörpers.

## Patentansprüche

1. Verfahren zur Herstellung von künstlichem Zahnersatz, bei dem in einer Fräseinheit auf Basis von bestimmten Fräsdaten aus einem Rohling ein Zahnersatzgrundkörper herausgefräst wird,
**dadurch gekennzeichnet, dass**
auf dem Zahnersatzgrundkörper eine pastöse Schneidemasse überschüssig aufgetragen wird, die durch materialspezifische Behandlung aushärtet, wobei anschließend der Zahnersatzgrundkörper mit darauf ausgehärteter Schneidemasse in der Fräseinheit in anatomische Form gefräst wird.

2. Verfahren nach Anspruch 1, **dadurch gekennzeichnet, dass** die Fräsdaten aus einem optischen oder mechanischen Abdruck direkt oder indirekt vom beschliffenen Zahnstumpf gewonnen werden.

3. Verfahren nach einem der Ansprüche 1 oder 2, **dadurch gekennzeichnet, dass** die endgültige Form des Zahnersatzes am Computer modelliert wird und ein entsprechender erster Datensatz abgespeichert wird, wobei ein zweiter Datensatz entsprechend dem Zahnersatzgrundkörper erzeugt und abgespeichert wird, der den Zahnersatz reduziert und dem Anteil der Schmelzschicht entspricht.

4. Verfahren nach einem der Ansprüche 1 bis 3, **dadurch gekennzeichnet, dass** der Rohling eine Basis besitzt, mit der er in der Fräseinheit lösbar fixiert ist.

5. Verfahren nach einem der Anspruch 1 bis 4, **dadurch gekennzeichnet, dass** der Rohling zum Auftragen und Aushärten der Schneidemasse aus der Fräseinheit entnommen wird.

6. Verfahren nach einem der Ansprüche 1 bis 5, **dadurch gekennzeichnet, dass** vor der Entnahme die Position des Rohlings mittels Positionierungshilfen registriert wird, wozu vorzugsweise mehrere Markierungspunkte oder Positionierungspins auf der Basis aufgebracht werden.

7. Verfahren nach einem der Ansprüche 1 bis 6, **dadurch gekennzeichnet, dass** der Positionierungspin einen ersten zylinderförmigen Bereich (1), eine Sockel (2) sowie eine Platte (3) besitzt, mit der der Pin mit der Basis verbunden ist.

8. Verfahren nach einem der Ansprüche 1 bis 7, **dadurch gekennzeichnet, dass** an dem Pin mehrere Nuten (4, 5, 6, 7, 8) angeordnet sind, in die korrespondierende Zapfen einer Aufnahme der Fräseinheit eingreifen.

9. Verfahren nach einem der Ansprüche 1 bis 8, **dadurch gekennzeichnet, dass** sowohl an dem zylinderförmigen Bereich (1), an dem Sockel (2) sowie an der Platte (3) mindestens eine Nut (4, 5, 6, 7, 8) angeordnet ist.

10. Verfahren nach einem der Ansprüche 1 bis 9, **dadurch gekennzeichnet, dass** der Rohling zur weiteren Bearbeitung zurück in die Fräseinheit gegeben wird, wo der Rohling anhand der Positionierungshilfen zunächst ausgerichtet wird.

11. Verfahren nach einem der Ansprüche 1 bis 10, **dadurch gekennzeichnet, dass** zur Ausrichtung des Rohlings optische Sensoren angeordnet sind, die die Position der Markierungspunkte registrieren.

12. Verfahren nach einem der Ansprüche 1 bis 11, **dadurch gekennzeichnet, dass** sowohl der Rohling als auch die Schneidemasse aus demselben Werkstoff bestehen, nämlich einem Komposit aus 75% bis 90%, vorzugsweise 80% bis 85%, nanokristallinen, silanisierten Gläsern und 10% bis 25%, vorzugsweise 15% bis 20% aus einer Kunststoffmatrix, wobei der Rohling durch Behandlung mit Druck und Wärme und die Schneidemasse durch Behandlung mit einer Lichtquelle auspolymersiert wird.

13. Verfahren nach einem der Ansprüche 1 bis 12, **dadurch gekennzeichnet, dass** nach dem Herausformen des Zahnersatzgrundkörpers eine Dispersionsschicht auf diesen aufgetragen wird.
